# EUROPÄISCHE PATENTSCHRIFT

(11) **EP 3 139 748 B1**
(45) Veröffentlichungstag und Bekanntmachung des Hinweises auf die Patenterteilung: **25.07.2018**
(21) Anmeldenummer: 15722983.2
(22) Anmeldetag: 06.05.2015
(51) Int. Cl.: A21C 15/00

(54) **WECHSELBARER CREMESTREICHKOPF**
INTERCHANGEABLE CREAM-SPREADING HEAD
TÊTE D'ENDUCTION DE CRÈME REMPLAÇABLE

(30) Priorität: 07.05.2014 AT 3362014
(43) Veröffentlichungstag der Anmeldung: 15.03.2017
(73) Patentinhaber: Haas Food Equipment GmbH, 1210 Wien (AT)
(72) Erfinder: BUCZOLITS, Peter, A-2000 Stockerau (AT); HAAS, Johannes, A-1040 Wien (AT); HAAS, Josef, A-2100 Leobendorf (AT); JIRASCHEK, Stefan, A-2202 Königsbrunn (AT); REITHNER, Jürgen, A-3562 Schönberg am Kamp (AT); SCHIESSBÜHL, Leopold, A-2013 Göllersdorf (AT); SCHUHLEITNER, Gerhard, A-3721 Limberg (AT)
(74) Vertreter: Puchberger & Partner Patentanwälte
(86) Internationale Anmeldenummer: PCT/EP2015/059938
(87) Internationale Veröffentlichungsnummer: WO 2015/169846

(56) Entgegenhaltungen:
- DE-C- 144 931
- DE-U1- 8 014 694
- US-A- 4 801 097

## Beschreibung

Die Erfindung betrifft einen Cremestreichkopf bzw. eine Vorrichtung und ein System enthaltend einen Cremestreichkopf, wobei der Cremestreichkopf zur dosierten Ausgabe und zum Auftrag einer Creme oder anderen Massen wie beispielsweise Schokoladencreme, Karamel oder Marmelade, auf einen Trägerkörper, wie beispielsweise auf eine auf einer Fördervorrichtung bewegte Flachwaffel, eingerichtet und/oder geeignet ist.

Cremestreichköpfe sind in unterschiedlichen Ausführungen bekannt. Beispielsweise sind Streichstationen zur Herstellung von Waffelblättern mit aufgetragenem Cremefilm insbesondere zur Herstellung von Waffelblöcken bekannt. Bei diesen Streichstationen wird ein Waffelblatt auf einer Transportfläche im Wesentlichen waagrecht transportiert. Oberhalb der Förderfläche ist ein Cremestreichkopf vorgesehen. Dieser Cremestreichkopf ist gemäß Stand der Technik in der Höhe verstellbar mit dem Maschinengestell der Fördervorrichtung verbunden. Der Cremestreichkopf umfasst gemäß Stand der Technik einen Behälter, in den eine Creme eingefüllt werden kann. Ferner umfasst der Cremestreichkopf Walzen, zwischen denen ein Cremespalt vorgesehen ist. Durch diesen Cremespalt kann ein Cremeband oder ein Cremefilm ausgegeben werden. Dieses Cremeband oder dieser Cremefilm ist beispielsweise 80cm breit und weist eine Dicke von 1 bis 8mm auf. Durch den Cremespalt kann ein Cremeband zur Herstellung von Waffelblättern mit aufgetragenem Cremefilm auf eine Vielzahl hintereinander angeordneter Waffelblätter aufgetragen werden. Nachteilig an dieser Konstruktion ist, dass der Umrüstaufwand bei einem Cremewechsel oder Produktwechsel sehr hoch ist. So muss die gesamte Anlage angehalten werden, die Streichstation muss gesäubert werden, sodass keine Reste der zuvor verwendeten Creme im Cremekopf verbleiben. Erst dann kann die neue Creme eingefüllt werden. Das lange Anhalten der Anlage ist bei der industriellen Herstellung von essbaren Produkten wie beispielsweise von Waffelblöcken unerwünscht.

DE8014694 U1 offenbart einen Cremestreichkopf mit der Merkmalen des Oberbegriffs des Anspruchs 1. Aufgabe der Erfindung ist es nun, einen Cremestreichkopf und eine Vorrichtung umfassend einen Cremestreichkopf und eine Fördervorrichtung bereitzustellen, die die Nachteile des Standes der Technik überwinden. Dies umfasst insbesondere, dass ein schneller Produktwechsel bzw. ein schneller Wechsel unterschiedlicher Cremen möglich ist. Ferner umfasst dies, dass zur Reinigung des Cremestreichkopfs die Herstellungsanlage so kurz wie möglich angehalten werden muss.

Die erfindungsgemäße Aufgabe wird durch die Merkmale des unabhängigen Patentanspruchs gelöst.

Die Erfindung betrifft einen Cremestreichkopf zur Ausgabe und zum Auftrag einer Creme oder einer Masse, wie beispielsweise eine Schokoladencreme, auf einen Trägerkörper, wie beispielsweise eine auf einer Fördervorrichtung bewegte Flachwaffel, zur Bildung eines Zwischenproduktes wie Waffelblätter mit aufgetragenem Cremefilm für die Herstellung von essbaren Produkten, wie beispielsweise von Waffelblöcken, umfassend einen Cremebehälter zur Aufnahme der auszugebenden Creme, einen länglichen Cremespalt zur Ausgabe eines Cremebandes, das insbesondere als Cremefilm ausgebildet ist, der dadurch gekennzeichnet ist, dass eine Kupplungsanordnung zur Kopplung des Cremestreichkopfes mit der Fördervorrichtung vorgesehen ist. Es ist vorgesehen, dass die Kupplungsanordnung ein oder mehrere Zentriermittel zur Zentrierung und Festlegung der Lage des Cremestreichkopfes gegenüber der Fördervorrichtung umfasst. Es ist vorgesehen, dass die Kupplungsanordnung einen Stecker zur Übertragung von elektrischer Energie und/oder elektrischen Signalen umfasst. Es ist vorgesehen, dass die Kupplungsanordnung einen Mediumsstecker zur Verbindung mit einer Mediumsleitung wie insbesondere einer Druckluftleitung oder einer Flüssigkeitsleitung umfasst, wobei der Mediumsstecker ein dichtender Mediumsstecker zur Verbindung zweier Leitungen wie insbesondere zweier Druckluftleitungen oder zweier Flüssigkeitsleitungen ist, und wobei gegebenenfalls ein Ventil vorgesehen ist.

Gegebenenfalls ist vorgesehen, dass der Cremestreichkopf ein selbsttragendes Cremestreichkopfgestell umfasst, mit dem die Komponenten des Cremestreichkopfs verbunden sind, sodass der Cremestreichkopf modulartig von der Fördervorrichtung trennbar und abnehmbar ist. Es ist vorgesehen, dass das oder die Zentriermittel, der oder die Stecker und gegebenenfalls der oder die Mediumsstecker alle dieselbe Steckrichtung aufweisen, sodass das oder die Zentriermittel, der oder die Stecker und der oder die Mediumsstecker durch Aufstecken und insbesondere durch Aufsetzen des Cremestreichkopfs auf die Fördervorrichtung mit ihren jeweiligen Steckpartnern verbindbar sind.

Die Erfindung betrifft insbesondere eine Vorrichtung zum Auftragen einer pumpfähigen Masse auf einen Trägerkörper umfassend einen Cremestreichkopf, eine Fördervorrichtung zur Beförderung des Trägerkörpers oder der Trägerkörper, mit einem ein Maschinengestell, an dem ein angetriebenes Fördermittel wie beispielsweise ein Förderband oder ein Förderriemen vorgesehen ist und das bevorzugt bodenstehend ausgeführt ist, die dadurch gekennzeichnet ist, dass ein lösbares Kupplungssystem zur Koppelung und Entkoppelung des Cremestreichkopfs mit oder von der Fördervorrichtung vorgesehen ist.

Gegebenenfalls ist vorgesehen, dass das Kupplungssystem ein oder mehrere Zentriermittel zur Zentrierung und Festlegung der Lage des Cremestreichkopfes gegenüber der Fördervorrichtung umfasst, wobei die Zentriermittel jeweils zwei Steckpartner umfassen, die entlang einer Steckrichtung miteinander verbindbar und voneinander trennbar sind, und wobei ein Steckpartner bevorzugt dauerhaft mit der Fördervorrichtung und der andere Steckpartner bevorzugt dauerhaft mit dem Cremestreichkopf verbunden ist.

Gegebenenfalls ist vorgesehen, dass das Kupplungssystem einen Stecker zur Übertragung von elektrischer Energie und/oder elektrischen Signalen umfasst, wobei der Stecker zwei Steckpartner umfasst, die entlang einer Steckrichtung miteinander verbindbar und voneinander trennbar sind und wobei ein Steckpartner bevorzugt dauerhaft mit der Fördervorrichtung und der andere Steckpartner bevorzugt dauerhaft mit dem Cremestreichkopf verbunden ist.

Gegebenenfalls ist vorgesehen, dass das Kupplungssystem einen Mediumsstecker zur Verbindung mit einer Mediumsleitung wie insbesondere einer Druckluftleitung oder einer Flüssigkeitsleitung umfasst, wobei der Mediumsstecker ein dichtender Mediumsstecker zur Verbindung zweier Leitungen wie insbesondere zweier Druckluftleitungen oder zweier Flüssigkeitsleitungen ist, wobei der Mediumsstecker zwei Steckpartner umfasst, die entlang einer Steckrichtung miteinander verbindbar und voneinander trennbar sind und wobei ein Steckpartner bevorzugt dauerhaft mit der Fördervorrichtung und der andere Steckpartner bevorzugt dauerhaft mit dem Cremestreichkopf verbunden ist.

Gegebenenfalls ist vorgesehen, dass das oder die Zentriermittel, der oder die Stecker und gegebenenfalls der oder die Mediumsstecker in einer vorbestimmten Anordnung am Cremestreichkopf und an der Fördervorrichtung vorgesehen sind, dass das oder die Zentriermittel, der oder die Stecker und gegebenenfalls der oder die Mediumsstecker alle dieselbe Steckrichtung aufweisen, sodass das oder die Zentriermittel, der oder die Stecker und gegebenenfalls der oder die Mediumsstecker insbesondere durch Aufstecken oder Aufsetzen des Cremestreichkopfs auf die Fördervorrichtung mit ihren jeweiligen Steckpartnern verbindbar sind und eine betriebsfertige Verbindung zwischen dem Cremestreichkopf und der Fördervorrichtung hergestellt ist.

Gegebenenfalls ist vorgesehen, dass die Steckrichtung quer zur Förderfläche der Fördervorrichtung und insbesondere des Fördermittels verläuft, dass die Steckrichtung normal zur Förderfläche der Fördervorrichtung und insbesondere des Fördermittels verläuft, und/oder dass die Steckrichtung im Wesentlichen senkrecht oder lotrecht verläuft, sodass ein oberhalb einer Förderfläche angeordneter Cremestreichkopf nach oben angehoben werden kann oder abhebbar ist.

Gegebenenfalls ist vorgesehen, dass das Kupplungssystem ein werkzeuglos montierbares, insbesondere ein werkzeuglos trennbares und verbindbares Kupplungssystem ist.

Gegebenenfalls ist vorgesehen, dass eine Verrieglungsvorrichtung zur Verriegelung des Cremestreichkopfs mit der Fördervorrichtung vorgesehen ist.

Gegebenenfalls betrifft die Erfindung ein System umfassend eine erfindungsgemäße Vorrichtung und zumindest zwei erfindungsgemäße Cremestreichköpfe, wobei beide Cremestreichköpfe wechselweise auf die Vorrichtung aufsteckbar sind, sodass bevorzugt ein Cremestreichkopf von der Vorrichtung getrennt und entfernt werden kann und der zweite Cremestreichkopf unmittelbar danach, insbesondere an der selben Stelle, mit der Vorrichtung verbunden werden kann.

Gegebenenfalls ist vorgesehen, dass der Cremestreichkopf einfach von der Fördervorrichtung getrennt werden kann. In weiterer Folge kann ein zweiter Cremestreichkopf mit der Fördervorrichtung verbunden werden. Durch diese Auswechselbarkeit des Cremestreichkopfs ist gewährleistet, dass die Anlage nur kurz angehalten werden muss. Beispielsweise kann der neu zugeführte Cremestreichkopf bereits ein gereinigter Cremestreichkopf sein. Gegebenenfalls kann der neu zugeführte Cremestreichkopf ein Cremestreichkopf zur Zuführung einer anderen Creme sein. Der ursprünglich vorgesehene Cremestreichkopf, der von der Fördervorrichtung getrennt wird, kann, während ein weiterer Cremestreichkopf mit der Anlage verbunden ist, unabhängig vom Produktionsprozess gewartet, neu befüllt oder gereinigt werden. Bevorzugt ist der erfindungsgemäße Cremestreichkopf in allen Ausführungsformen derart ausgebildet, dass er durch einfaches Aufstecken oder Anstecken auf oder an die Fördervorrichtung mit dieser verbunden ist. Insbesondere ist der Cremestreichkopf durch einfaches Aufstecken oder Aufsetzen mit der Fördervorrichtung verbindbar. Dabei ist bevorzugt der Cremestreichkopf durch das einfache Aufstecken oder Aufsetzen bereits betriebsfertig bzw. betriebsbereit mit der Fördervorrichtung verbunden.

In der Praxis bedeutet dies, dass der Cremestreichkopf beispielsweise über einen Hubwagen oder eine Kranvorrichtung zur Fördervorrichtung transportiert werden kann. In einem weiteren Schritt wird der Cremestreichkopf auf oder an die Fördervorrichtung gesteckt. Dieses Aufstecken beinhaltet beispielsweise, dass Zentriermittel ineinander gesteckt werden, dass Stecker zur Übertragung von elektrischer Energie oder elektrischen Signalen zusammengesteckt werden und/oder dass Mediumsstecker zur Verbindung von Mediumsleitungen wie beispielsweise Druckluftleitungen oder Flüssigkeitsleitungen miteinander verbunden werden. Dieses Aufstecken ist beispielsweise ein Aufsetzen von oben. Gegebenenfalls ist das Aufstecken eine mehrteilige, komplexe Bewegung, wobei zuerst beispielsweise eine seitliche Schiebbewegung und dann eine Steckbewegung erfolgt. Gegebenenfalls ist eine Verriegelungsvorrichtung vorgesehen, die eine Verriegelung des Cremestreichkopfs mit der Fördervorrichtung bewirkt.

Bevorzugt ist der Cremestreichkopf durch einfaches Aufsetzen von oben mit der Fördervorrichtung verbunden oder verbindbar. Diese Verbindung umfasst einerseits die Zentrierung und somit die Festlegung der gewünschten Lage des Cremestreichkopfs gegenüber der Fördervorrichtung und die Verbindung der Stecker und gegebenenfalls der Mediumsstecker. Durch einfaches Aufsetzen ist bei dieser Ausführungsform der Cremekopf mit der Fördervorrichtung verbunden, sodass sich die Vorrichtung in einer betriebsfertigen oder betriebsbereiten Stellung befindet.

Der Cremestreichkopf weist bevorzugt ein selbsttragendes Cremestreichkopfgestell auf. An diesem Cremestreichkopfgestell sind bevorzugt alle Komponenten des Cremestreichkopfs vorgesehen. Durch das selbsttragende Cremestreichkopfgestell und die mit diesem Gestell verbundenen Komponenten des Cremestreichkopfs ist der Cremestreichkopf modulartig oder als wechselbares Modul ausgebildet. Der Cremestreichkopf bildet somit bevorzugt ein eigenständiges, selbsttragendes Modul, das beispielsweise über einen Hubwagen abgehoben werden kann. Ferner kann dieser als Modul ausgebildete Cremestreichkopf entnommen werden, gereinigt werden, gewartet werden etc., ohne während dieser Schritte die Anlage anhalten zu müssen. An dem selbsttragenden Cremestreichkopfgestell können beispielsweise die Lagerungen für Cremewalzen, Antriebe zum Antrieb der Cremewalzen, weitere Lagerungen, Aussteifungselemente, Abstreifer und weitere Elemente vorgesehen sein.

Bevorzugt sind an dem Cremestreichkopfgestell auch das oder die Zentriermittel, der oder die Stecker und gegebenenfalls der oder die Mediumsstecker vorgesehen. Diese sind bevorzugt starr mit dem Cremestreichkopfgestell bzw. in ihrer Lage unveränderlich gegenüber dem Cremestreichkopfgestell angeordnet oder verbunden. Die Zentriermittel, Stecker und/oder Mediumsstecker sind dabei in einer vorbestimmten Lage an dem Cremestreichkopf und/oder dem Cremestreichkopfgestell vorgesehen. Die jeweiligen Steckpartner dieser Komponenten sind bevorzugt auch in einer vorbestimmten Lage jeweils starr oder im Wesentlichen unbeweglich an der Fördervorrichtung vorgesehen. Die Lagen der Steckpartner an der Fördervorrichtung und am Streichkopf entsprechen einander, sodass durch einfaches Aufsetzen alle vorhandenen Zentriermittel, Stecker und/oder Mediumsstecker durch das Aufstecken des Cremestreichkopfs auf die Fördervorrichtung verbunden werden oder verbindbar sind.

Dazu weisen die Zentriermittel, die Stecker und/oder die Mediumsstecker eine Steckrichtung auf, entlang derer die Steckpartner miteinander verbunden werden können und/oder entlang derer die Steckpartner voneinander getrennt werden können. Die Steckrichtung entspricht dabei bevorzugt jener Richtung, entlang derer der Cremestreichkopf auf die Fördervorrichtung aufgesteckt werden kann bzw. jener Richtung, entlang derer der Cremestreichkopf von der Fördervorrichtung abgenommen werden kann. Bevorzugt verläuft diese Steckrichtung im Wesentlichen quer zur Förderfläche, normal zur Förderfläche und/oder lot- bzw. senkrecht. Dadurch kann über eine Hubvorrichtung wie beispielsweise einen Hubwagen ein oberhalb der Förderfläche angeordneter Cremestreichkopf abgenommen und abtransportiert werden. Auch die Zuführung und das Aufstecken geschehen bei dieser Ausführungsform bevorzugt durch einfaches Aufsetzen von oben.

Gegebenenfalls ist durch das Eigengewicht des Cremestreichkopfs eine ausreichende Verbindung hergestellt. Gegebenenfalls ist eine Verriegelungsvorrichtung vorgesehen, um den Cremestreichkopf mit der Fördervorrichtung zu verriegeln. Gegebenenfalls ist diese Verriegelungsvorrichtung als pneumatische Arretierung ausgebildet.

Gegebenenfalls ist der komplette Cremestreichkopf mittels Hubwagen abnehmbar und durch das erfindungsgemäße Kupplungssystem mit der Maschine verbindbar.

Gegebenenfalls wird die Verbindung durch einfaches positionsgenaues Absetzen des Cremestreichkopfs auf der Fördervorrichtung hergestellt. Dabei dienen Zentrierungsmittel zur Zentrierung der Lage des Cremestreichkopfs gegenüber der Fördervorrichtung. Die Zentriermittel zentrieren gegebenenfalls in allen Ausführungsformen auch beispielsweise die Stecker und gegebenenfalls die Mediumsstecker zueinander.

In allen Ausführungsformen können die Zentriermittel Einlaufschrägen oder konisch oder abgerundet ausgebildete Fortsätze aufweisen, um die Zentrierung und das Aufstecken zu erleichtern.

Durch Aufstecken des Cremekopfs auf die Fördervorrichtung wird dieser bevorzugt in eine einsatzbereite Stellung gebracht, in der beispielsweise alle Verbindungen wie eine mechanische Verbindung, eine elektrische Verbindung und/oder eine pneumatische Verbindung hergestellt ist. Durch Zuführen eines baugleichen oder passenden zweiten Cremestreichkopfs kann dadurch ein schneller Produktwechsel vorgenommen werden. Ebenso verkürzt sich dadurch die Reinigungsdauer. Ferner kann die Reinigung wesentlich gründlicher erfolgen als bei starr miteinander verbundenen Komponenten.

Bevorzugt ist ein Cremebehälter vorgesehen. Auch dieser Cremebehälter ist gegebenenfalls abnehmbar bzw. aufsteckbar mit dem Cremestreichkopf verbunden, sodass auch dieser Cremebehälter einfach, bevorzugt werkzeuglos vom Cremestreichkopf abgenommen werden kann.

In Förderrichtung der Trägerkörper, insbesondere in Förderrichtung der zugeführten Flachwaffelblätter, kann eine seitliche Kalibrierung oder Führung der Waffelblätter angeordnet sein. Diese kann manuell oder beispielsweise auch über gesteuerte oder geregelte Antriebe eingestellt werden. Dadurch kann der Cremeauftrag auf das Waffelblatt optimiert werden und allgemein Einfluss auf wachsende bzw. schrumpfende Waffelblätter genommen werden. Diese Veränderung der Waffelblattgröße geschieht beispielsweise aufgrund der Veränderung der Feuchtigkeit. Bevorzugt wird dazu auch die Länge des Cremespalts angepasst, sodass ein Überschuss an Creme minimiert wird und dennoch der oder die Trägerkörper vollflächig mit der Creme bestrichen wird oder werden.

Die Mediumsstecker bzw. die Mediumsleitungen sind beispielsweise zur Zuführung von Druckluft von der Fördervorrichtung zum Cremestreichkopf geeignet und/oder eingerichtet. Beispielsweise wird Druckluft zur Verstellung des Kalibriermessers oder für eine pneumatische Walzenabdichtung verwendet.

Gegebenenfalls umfassen die erfindungsgemäße Vorrichtung und der erfindungsgemäße Cremestreichkopf Mediumsleitungen bzw. einen Mediumsstecker zur Zuführung eines flüssigen Mediums. Dieses Medium kann beispielsweise ein erwärmtes Wasser oder ein erwärmtes Fluid sein, das beispielsweise durch die Cremestreichwalzen und fallweise durch den Cremebehälter oder dessen Wand gepumpt wird, um diese zu beheizen. Dadurch kann beispielsweise der Cremeauftrag verbessert werden.

Gegebenenfalls sind Stecker zur Übertragung von elektrischer Energie und/oder elektrischen Signalen vorgesehen. Beispielsweise ist ein Antrieb zur Drehung der Cremewalzen vorgesehen. Der Strom für diesen Antrieb kann beispielsweise über den Stecker zugeführt werden. Gegebenenfalls ist eine Steuerungsvorrichtung vorgesehen. Die Steuerungssignale können über die Stecker beispielsweise mit einer Steuerung einer Anlage oder mit der Steuerung der Fördervorrichtung verbunden werden.

Somit bestehen bei der vorliegenden Vorrichtung gegebenenfalls ein oder mehrere Stecker, ein oder mehrere Mediumsstecker und/oder ein oder mehrere Zentriermittel.

Diese können nebeneinander angeordnet sein. Bevorzugt weisen alle diese Stecker und Zentriermittel dieselbe Steckrichtung auf.

Der Cremestreichkopf kann gegebenenfalls starr zueinander angeordnete Drehachsen der Cremewellen umfassen. Diese Achsen der Cremewellen entsprechen den Drehachsen der Cremewellen bzw. der Cremewalzen. Durch die fallweise starre Anordnung der Achsen gegenüber einander ist der Abstand bzw. der Cremespalt zwischen den Cremewalzen im Wesentlichen unveränderbar. Jedoch kann gemäß einer bevorzugten Ausführungsform ein Kalibriermesser vorgesehen sein. Dieses Kalibriermesser entspricht einem plattenförmigen oder balkenförmigen Körper, der gegebenenfalls Richtung Cremespalt angespitzt ist. Dieses Kalibriermesser verläuft bevorzugt entlang des gesamten Cremespalts. Durch Bewegung des Kalibriermessers kann die Dicke des Cremespalts verändert werden, um beispielsweise die Dicke des ausgegebenen Cremebandes oder des Cremefilms einstellen zu können. Die Bewegung bzw. die Verstellung des Kalibriermessers kann manuell oder optional mittels eines Antriebs erfolgen. Beispielsweise können in allen Ausführungsformen dadurch Cremedicken von 0,5 bis 10mm erreicht werden. Bevorzugt kann eine Cremedicke bzw. eine Banddicke von 0,8 bis 8mm erreicht werden. Durch diese starre Anordnung der Drehachsen zueinander kann die Cremefilmbreite bzw. die Länge des Cremespaltes exakt eingestellt werden. Insbesondere kann die Cremespalte durch seitlich beispielsweise pneumatisch angedrückte Dichtplatten, gegebenenfalls mit Einlegekeilen, abgedichtet werden, ohne dass ein Cremeanteil in die Lagerung bzw. in den Antriebsstrang der Cremewalzen gelangen kann. Gegebenenfalls wird das Kalibriermesser zur Veränderung der Dicke des Cremespaltes beispielsweise in tangentialer Richtung der Cremewalzen bewegt. Gegebenenfalls wird das Kalibriermesser zur Veränderung der Dicke des Cremespaltes geneigt und insbesondere um eine Gerade geneigt, die Parallel zu den Achsen der Cremewellen verläuft.

Die Drehzahl des Streichkopfes kann gegebenenfalls verändert und angepasst werden. Gegebenenfalls kann der Abstand des Streichkopfes zum Waffelblatt angepasst und verändert werden.

In weiterer Folge wird die Erfindung anhand konkreter Ausführungsbeispiele weiter beschrieben.
Fig. 1 zeigt eine Schrägansicht einer erfindungsgemäßen Vorrichtung bzw. eines erfindungsgemäßen Cremestreichkopfes in einer exemplarischen, schematischen Schrägansicht.
Fig. 2 zeigt eine schematische Schnittdarstellung von Teilen des Kupplungssystems.
Fig. 3 zeigt eine schematische Schnittdarstellung eines Details der erfindungsgemäßen Vorrichtung bzw. des erfindungsgemäßen Cremestreichkopfs.
Fig. 4 zeigt eine schematische Schnittdarstellung eines erfindungsgemäßen Cremestreichkopfs.

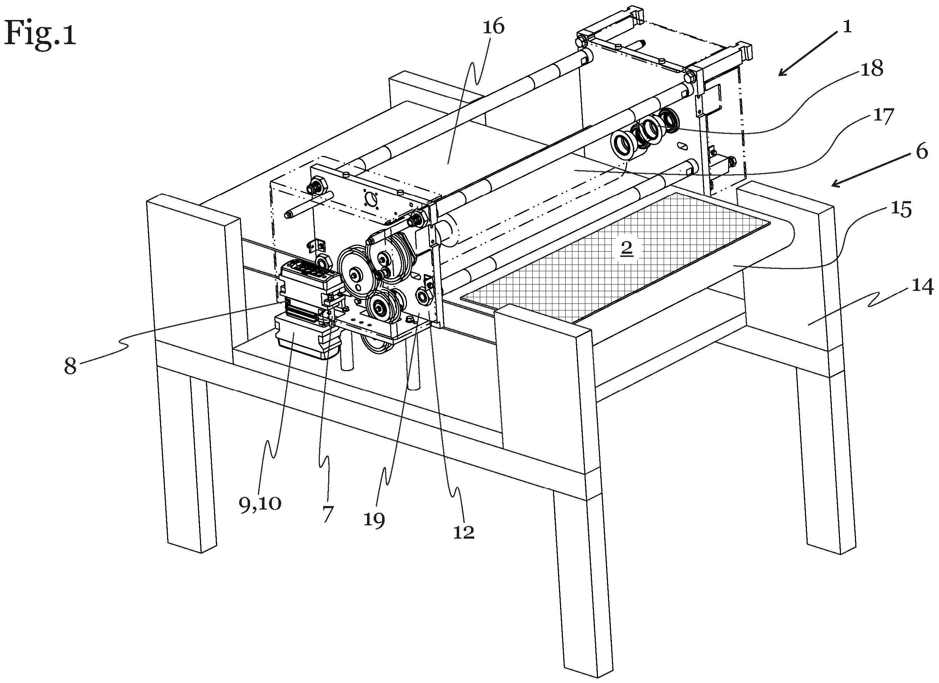

Fig. 1 zeigt eine erfindungsgemäße Vorrichtung umfassend einen Cremestreichkopf 1 sowie eine Fördervorrichtung 6. Auf der Fördervorrichtung 6 können Trägerkörper 2 transportiert werden. Bevorzugt werden die Trägerkörper 2 Stoß an Stoß nacheinander am Cremestreichkopf 1 vorbeigeführt. Der Cremestreichkopf 1 ist dazu eingerichtet, eine Creme auszugeben. Diese Creme wird in Form eines Cremebandes oder eines Cremefilms ausgegeben. Bevorzugt entspricht die Breite des ausgegebenen Bandes der Abmessung des Trägerkörpers 2, sodass dieser flächig mit der Creme bestrichen oder belegt wird. Die Dicke der Cremeschicht bzw. des Cremebandes oder des Cremefilms liegt bevorzugt zwischen 0,8 und 8mm.

Der Cremestreichkopf 1 umfasst ein Cremestreichkopfgestell 12. An diesem Cremestreichkopfgestell 12 sind bevorzugt alle Elemente des Cremestreichkopfs 1 vorgesehen. Beispielsweise sind die Cremewalzen 17 über Lager 18 mit dem Cremestreichkopfgestell 12 verbunden. Das Cremestreichkopfgestell 12 ist bevorzugt selbsttragend ausgeführt, wodurch der gesamte Cremestreichkopf 1 als eine Einheit bzw. als ein Modul von der Fördervorrichtung 6 abgenommen werden kann. Am Cremestreichkopfgestell 12 ist bevorzugt auch das Kupplungssystem 8 enthaltend Zentriermittel 7, Stecker 9 und Mediumsstecker 10 angeordnet. Die Anordnung dieser Stecker 9 bzw. Zentriermittel 7 ist derart ausgestaltet, dass durch einfaches Aufstecken bzw. Anstecken des Cremestreichkopfs 1 auf die Fördervorrichtung 6 die Verbindung dieser Komponenten hergestellt ist. Die Fördervorrichtung 6 umfasst ein Maschinengestell 14. Dieses Maschinengestell 14 ist bevorzugt ebenfalls selbsttragend und gegebenenfalls bodenstehend ausgeführt. Am Maschinengestell 14 ist bevorzugt zumindest ein Fördermittel 15 mit einer Förderfläche 16 vorgesehen. Das Fördermittel 15 ist beispielsweise ein Bandförderer mit einem endlosen Transportband oder ein Riemenförderer. Gegebenenfalls sind auch andere Fördermittel vorgesehen. Auf der Förderfläche 16 werden die Trägerkörper 2 transportiert und im Bereich des Cremestreichkopfs 1 mit einer Creme versehen. Die Zentriermittel 7, die Stecker 9 und die Mediumsstecker 10 weisen eine Steckrichtung 13 auf. Die Steckrichtung 13 ist jene Richtung, entlang derer die genannten Komponenten miteinander zusammengesteckt und getrennt werden können. Die Steckrichtung 13 aller Zentriermittel 7, Stecker 9 und Mediumsstecker 10 ist gleich. Die Steckrichtungen 13 dieser Komponenten verlaufen somit alle im Wesentlichen parallel. Dadurch kann durch einfaches Aufstecken des Cremestreichkopfs 1 auf die Fördervorrichtung 6 die Verbindung aller Komponenten hergestellt werden.

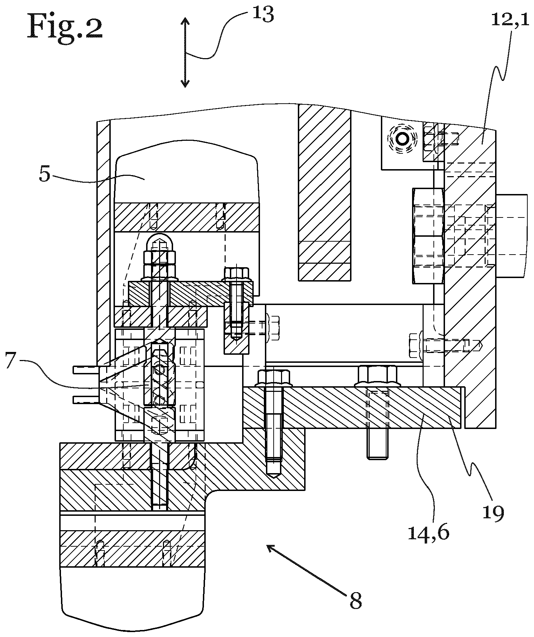

Fig. 2 zeigt Details des Kupplungssystems 8 in einer schematischen Schnittdarstellung. Ein Teil des Maschinengestells 14 der Fördervorrichtung 6 ist zentriert bzw. lagezentriert mit dem Cremestreichkopfgestell 12 des Cremestreichkopfs 1 verbunden. Die Zentriermittel 7 sind dabei insbesondere als Steckverbindung ausgebildet. Dabei umfasst bevorzugt einer der Steckpartner einen Fortsatz und der andere Steckpartner eine Aufnahme bzw. eine Hülse. Der Fortsatz kann in die Hülse eingeführt werden, wobei die beiden Komponenten eine Passung zueinander aufweisen, sodass eine Zentrierung erfolgt. Bevorzugt weisen die Steckpartner Einlaufschrägen auf, sodass bei unexaktem Zusammenführen des Cremestreichkopfs 1 und der Fördervorrichtung 6 eine selbsttätige Zentrierung erfolgt. Beispielsweise weist der Fortsatz eine konische oder abgerundete Anspitzung auf. Gegebenenfalls weist auch die Hülse eine konische Aufweitung auf. Dadurch ist die Zentrierung der Komponenten gegenüber einander erleichtert.

Ferner kann zur Abstützung der Komponenten gegenüber einander eine Schulter 19 vorgesehen sein, auf der sich der Cremestreichkopf 1 an der Fördervorrichtung 6 bzw. am Maschinengestell 14 abstützt. Diese Schulter kann, wie beispielsweise in Fig. 1 dargestellt, höhenveränderbar sein. Dadurch kann der Abstand des Cremestreichkopfs 1 zur Förderfläche 16 verändert werden.

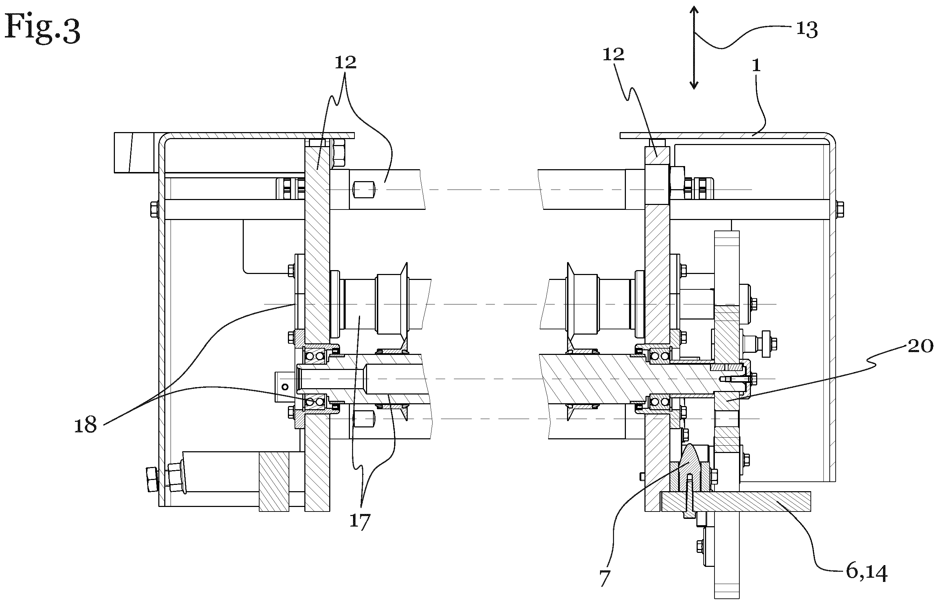

Fig. 3 zeigt eine schematische Schnittdarstellung durch Teile des Cremestreichkopfs 1 bzw. der Fördervorrichtung 6. Insbesondere ist ein Zentriermittel 7 geschnitten dargestellt. Bei diesem ist ein Dorn, der starr mit dem Maschinengestell 14 verbunden ist, in eine mit dem Cremestreichkopf 1 verbundene Hülse eingeführt. Dadurch ist eine seitliche Zentrierung, insbesondere normal zur Steckrichtung 13 gegeben. Der Cremestreichkopf 1 umfasst zwei Cremewalzen 17. Diese sind bevorzugt seitlich durch Lager 18 gelagert und gegebenenfalls über einen nicht dargestellten Antrieb angetrieben. Insbesondere kann auch ein Getriebe 20 vorgesehen sein, über die der Antrieb mit einer oder mehreren Cremestreichwalzen verbunden ist.

Bevorzugt ist der Antrieb an der Fördervorrichtung 6 vorgesehen und über eine Koppelung wie beispielsweise einen Riementrieb oder ein Zahnrad mit dem Cremestreichkopf 1 verbunden. Gegebenenfalls ist der Antrieb am Cremestreichkopfgestell 12 vorgesehen. Die Zuführung der Energie für den Antrieb erfolgt insbesondere über Stecker 9 und/oder die Mediumsstecker 10. So können elektrische Antriebe, pneumatische Antriebe oder hydraulische Antriebe vorgesehen sein.

Das Cremestreichkopfgestell 12 umfasst gegebenenfalls Seitenwände, Aussteifungselemente, durch die die Seitenwände verbunden sind, und gegebenenfalls weitere tragende Elemente, sodass ein selbsttragendes Cremestreichkopfgestell 12 gebildet ist.

Gegebenenfalls ist eine Abdeckung vorgesehen, durch die insbesondere das Getriebe und weitere Komponenten abgedeckt sind. Dadurch wird beispielsweise verhindert, dass durch austretendes Öl oder andere Substanzen die Trägerkörper 2 oder die Creme kontaminiert werden.

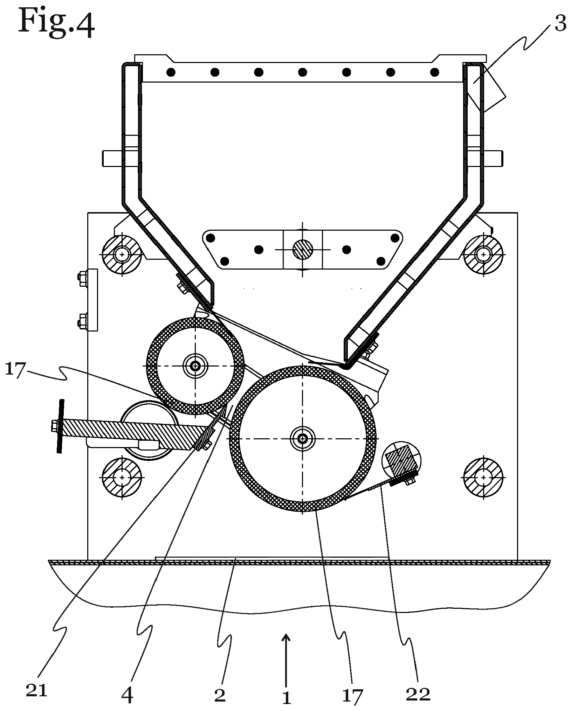

Fig. 4 zeigt eine schematische Schnittdarstellung eines Cremestreichkopfs 1. Dieser umfasst einen Cremebehälter 3, der insbesondere trichterförmig ausgebildet sein kann. In diesem Cremebehälter 3 befindet sich gegebenenfalls die Creme. Ferner sind Cremewalzen 17 vorgesehen. Diese Cremewalzen 17 weisen einen Abstand zueinander auf, wodurch ein Spalt gebildet ist. Durch diesen Spalt kann die Creme Richtung Trägerkörper 2 transportiert werden. Ferner ist bevorzugt ein Kalibriermesser 21 vorgesehen. Dieses Kalibriermesser 21 entspricht einem platten- oder balkenförmigen Körper, der gegebenenfalls in den Spalt zwischen die beiden Cremewalzen 17 einführbar ist. Durch die Veränderung der Lage des Kalibriermessers kann die Breite des Cremespalts 4 und dadurch die Dicke des ausgegebenen Cremebandes oder des ausgegebenen Cremefilms eingestellt werden. Die Bewegung des Kalibriermessers 21 erfolgt beispielsweise manuell oder über einen Antrieb. Der Antrieb kann beispielsweise ein elektrischer Antrieb, ein pneumatischer Antrieb und/oder ein hydraulischer Antrieb sein.

Ferner kann der erfindungsgemäße Cremestreichkopf 1 Abstreifer 22 umfassen.

Gegebenenfalls sind die Cremewalzen 17 und/oder der Cremebehälter 3 beheizt. Diese Beheizung geschieht beispielsweise über die Zuführung eines flüssigen, beheizten Heizmediums wie insbesondere Wasser in das Innere der Walzen.

In allen Ausführungsformen können über die oder den Stecker 9 elektrische Energie und/oder elektrische Signale übertragen werden. Beispielsweise kann über einen Stecker 9 das Signal eines Sicherheitsschalters übertragen sein oder werden. Beispielsweise sollte die erfindungsgemäße Vorrichtung bzw. der erfindungsgemäße Cremestreichkopf 1 nur dann in Betrieb genommen werden können, wenn alle Teile vorschriftsmäßig angeordnet sind. Beispielsweise muss oder soll der Cremebehälter 3 richtig auf den Cremestreichkopf 1 aufgesetzt sein. Gegebenenfalls gibt es Sicherheitsabdeckplatten oder Sicherheitsschalter, die sich in einer vorbestimmten Stellung befinden müssen. Bevorzugt sollen die Vorrichtung und/oder der Cremestreichkopf 1 erst dann in Betrieb genommen werden können, wenn sich alle diese Sicherheitsschalter in ihrer Freigabestellung befinden. Die Signale der Sicherheitsschalter können beispielsweise über die Stecker an die Vorrichtung und insbesondere an eine Steuerungseinrichtung werden.

Gegebenenfalls wird in allen Ausführungsformen über einen Stecker 9 elektrische Energie zur Beheizung einer oder mehrerer Komponenten des Cremestreichkopfs 1 übertragen. Beispielsweise können der Behälter, das Kalibriermesser 21 oder andere Komponenten, beispielsweise auch die Walzen über eine elektrische Heizung beheizt sein. Gegebenenfalls wird über einen Stecker 9 elektrische Energie zur Bewegung eines Rührers oder eines Paddels übertragen, die beispielsweise bewegbar und angetrieben in dem Cremebehälter 3 vorgesehen sind, um eine bessere Durchmischung der Creme zu bewirken.

Gegebenenfalls wird in allen Ausführungsformen über einen Mediumsstecker 10 ein Medium an den Cremestreichkopf 1 übertragen. Dieses Medium kann beispielsweise eine beheizte Flüssigkeit oder eine gekühlte Flüssigkeit sein. Dadurch können Komponenten der Vorrichtung und/oder des Cremestreichkopfs 1 gekühlt oder beheizt werden. Beispielsweise kann über eine Wasserkühlung oder Wasserheizung die Temperatur der Cremestreichwalze 17 beeinflusst werden. Gegebenenfalls kann auch der Behälter geheizt oder gekühlt werden. Gegebenenfalls weist dieser Mediumsstecker 10 in allen Ausführungsformen ein Ventil auf, um ein Austreten des Mediums bei getrenntem Stecker 9 zu verhindern.

Gegebenenfalls kann in allen Ausführungsformen das Kalibriermesser 21 an einer der Cremestreichwalzen 1 angelegt sein. Dadurch wirkt das Kalibriermesser 21 gegebenenfalls als Abstreifer. Das Kalibriermesser 21 liegt in dieser Ausführungsform bevorzugt linienförmig oder flächenförmig entlang eines Großteils oder entlang der gesamten Länge des Walzenspaltes an einer Walze an.

Gegebenenfalls können in allen Ausführungsformen Zentriermittel 7 wie Passstifte wirken. Beispielsweise ist ein einziger Passstift vorgesehen, der zumindest zwei Freiheitsgrade des Cremestreichkopfs 1 gegenüber dem Maschinengestell 14 sperrt. Eine weitere Zentrierung kann beispielsweise durch Blockierung der Verdrehung um dieses passstiftförmige Zentriermittel 7 erfolgen. Dies ist beispielsweise über eine Art Passfeder oder über Fortsätze gegeben, die beispielsweise in Nuten ragen. Um Doppelpassungen zu vermeiden, können in allen Ausführungsformen weitere Zentriermittel zumindest teilweise schwimmend oder bewegbar gelagert sein. Beispielsweise ist zur Zentrierung der Stecker gegenüber einander eine Zentrierung in Form von Zentriermitteln 7 vorgesehen. Einer der Stecker 9, einer der Mediumsstecker 10 und/oder ein Teil des Zentriermittels 7 können dabei schwimmend bzw. geringfügig bewegbar gelagert sein. Dadurch kommt es zu einer Zentrierung der Stecker 9 gegenüber einander, ohne dabei ein Verkeilen durch Doppelpassungen zu bewirken. Beispielsweise ist eine Gruppe von Steckpartnern einer Komponente (Streichkopf oder Fördervorrichtung) auf einer Platte vorgesehen, die in gewissem Maße, beispielsweise um 1 bis 5mm bewegbar ausgebildet ist. Die Steckpartner der jeweils anderen Komponente sind beispielsweise fest mit dem Gestell verbunden. Durch Aufstecken des Cremestreichkopfs 1 auf oder an die Fördervorrichtung 6 werden die Stecker 9 und gegebenenfalls die Mediumsstecker 10 gegenüber einander zentriert. Diese Zentrierung geschieht über die Zentriermittel 7.

Gegebenenfalls kann in allen Ausführungsformen der Antrieb zur Drehung der Cremewalzen 17 an der Fördervorrichtung 6 und/oder an dem Maschinengestell 14 der Fördervorrichtung 6 angeordnet sein. Über Zahnräder, Riemen oder ähnliche Übertragungsglieder kann die Drehung dieses Antriebs auf den Cremestreichkopf 1 und insbesondere auf die Walzen übertragen werden.

Gegebenenfalls sind in allen Ausführungsformen am Maschinengestell 14 der Fördervorrichtung vertikal nach oben ragende Fortsätze vorgesehen. Die Länge dieser Fortsätze bzw. deren Höhe kann beispielsweise über Spindellagerungen oder Schraubverbindungen verändert werden. Auf diesen Fortsätzen ist gegebenenfalls ein Körper vorgesehen, der eine Schulter umfasst, auf die der Cremestreichkopf aufgesetzt werden kann. Über diese veränderbare Länge bzw. Höhe der Fortsätze kann die Positionierung des Cremestreichkopfs 1 gegenüber der Förderfläche 6 eingestellt werden. Insbesondere kann die Höhe des Cremestreichkopfs 1 verändert werden.

Gegebenenfalls kann in allen Ausführungsformen die Vorrichtung bzw. der Cremekopf Teil eines Systems sein. Dieses System umfasst zumindest eine Fördervorrichtung 6 und zumindest zwei Cremestreichköpfe 1. Dieses System ermöglicht das Auswechseln des Cremestreichkopfs 1, wobei die Anlage und/oder die Vorrichtung nur kurz angehalten werden müssen. Beispielsweise kann, wie oben beschrieben, der neu zugeführte Cremestreichkopf 1 bereits gereinigt oder mit einer neuen Creme versehen sein. Die erfindungsgemäße Vorrichtung kann demnach gegebenenfalls dadurch gekennzeichnet sein, dass ein System vorgesehen ist, das eine Fördervorrichtung 6, einen ersten Cremestreichkopf 1 und einen zweiten Cremestreichkopf 1 umfasst, wobei bevorzugt ein Cremestreichkopf 1 mit der Fördervorrichtung 6 verbunden oder verbindbar ist und bei Entfernen des ersten Cremestreichkopfs 1 unmittelbar danach ein zweiter Cremestreichkopf 1 mit der Fördervorrichtung 6 verbindbar und bevorzugt aufsteckbar ist. Bevorzugt weisen beide Cremestreichköpfe 1 dieselbe Anordnung und Lage der Zentriermittel 7, der Stecker 9 und/oder der Mediumsstecker 10 auf. Beide Cremestreichköpfe 1 umfassen bevorzugt ein selbsttragendes Cremestreichkopfgestell 12.

Gegebenenfalls dient das Kupplungssystem 8 der Koppelung von Strom und Druckluft. Die Druckluft ist gegebenenfalls für das Kalibriermesser 21 und/oder für die pneumatische Walzenabdichtung erforderlich.

Der Cremestreichkopf 1 wird gegebenenfalls einfach auf die Anlage aufgesetzt und ist einerseits durch sein Eigengewicht und andererseits an beiden Seiten durch die Aufnahmeausnehmungen in der Auflagefläche in seiner Position fixiert. Eine Verschraubung ist dabei bevorzugt nicht vorgesehen, insbesondere da der Cremestreichkopf rasch und werkzeuglos austauschbar sein soll. Gegebenenfalls ist jedoch eine pneumatische Arretierung vorgesehen.

In allen Ausführungsformen kann die Kupplungsanordnung 5 ein Teil des Kupplungssystems 8 sein.

### Bezugszeichenliste

- 1: Cremestreichkopf
- 2: Trägerkörper
- 3: Cremebehälter
- 4: Cremespalt
- 5: Kupplungsanordnung
- 6: Fördervorrichtung
- 7: Zentriermittel
- 8: Kupplungssystem
- 9: Stecker
- 10: Mediumsstecker
- 11: -
- 12: Cremestreichkopfgestell
- 13: Steckrichtung
- 14: Maschinengestell
- 15: Fördermittel
- 16: Förderfläche
- 17: Cremewalzen
- 18: Lager
- 19: Schulter
- 20: Getriebe
- 21: Kalibriermesser
- 22: Abstreifer

## Patentansprüche

1. Cremestreichkopf (1) zur Ausgabe und zum Auftrag einer Creme oder einer Masse, wie insbesondere eine Schokoladencreme, auf einen auf einer Fördervorrichtung (6) bewegten Trägerkörper (2), wie insbesondere eine Flachwaffel, zur Bildung eines Zwischenproduktes wie Waffelblätter mit aufgetragenem Cremefilm für die Herstellung von essbaren Produkten, wie insbesondere von Waffelblöcken, umfassend:
- einen Cremebehälter (3) zur Aufnahme der auszugebenden Creme
- einen länglichen Cremespalt (4) zur Ausgabe eines Cremebandes, das insbesondere als Cremefilm ausgebildet ist,
- wobei eine Kupplungsanordnung (5) zur Kopplung des Cremestreichkopfes (1) mit der Fördervorrichtung (6) vorgesehen ist,
- wobei die Kupplungsanordnung (5) ein oder mehrere Zentriermittel (7) zur Zentrierung und Festlegung der Lage des Cremestreichkopfes (1) gegenüber der Fördervorrichtung (6) umfasst, **dadurch gekennzeichnet**,
- dass die Kupplungsanordnung (5) einen Stecker (9) zur Übertragung von elektrischer Energie und/oder elektrischen Signalen umfasst,
- dass die Kupplungsanordnung (5) einen Mediumsstecker (10) zur Verbindung mit einer Mediumsleitung wie insbesondere einer Druckluftleitung oder einer Flüssigkeitsleitung umfasst, wobei der Mediumsstecker (10) ein dichtender Mediumsstecker (10) zur Verbindung zweier Leitungen wie insbesondere zweier Druckluftleitungen oder zweier Flüssigkeitsleitungen ist, und wobei gegebenenfalls ein Ventil vorgesehen ist, und
- **dass** das oder die Zentriermittel (7), der oder die Stecker (9) und der oder die Mediumsstecker (10) alle dieselbe Steckrichtung (13) aufweisen, sodass das oder die Zentriermittel (7), der oder die Stecker (9) und der oder die Mediumsstecker (10) durch Aufstecken und insbesondere durch Aufsetzen des Cremestreichkopfs (1) auf die Fördervorrichtung (6) mit ihren jeweiligen Steckpartnern verbindbar sind.

2. Cremestreichkopf nach Anspruch 1, **dadurch gekennzeichnet, dass** der Cremestreichkopf (1) ein selbsttragendes Cremestreichkopfgestell (12) umfasst, mit dem die Komponenten des Cremestreichkopfs (1) verbunden sind, sodass der Cremestreichkopf (1) modulartig von der Fördervorrichtung (6) trennbar und abnehmbar ist.

3. **Vorrichtung** zum Auftragen einer pumpfähigen Masse auf einen Trägerkörper (2) umfassend:
- einen Cremestreichkopf (1) nach einem der vorangegangenen Ansprüche,
- eine Fördervorrichtung (6) zur Beförderung des Trägerkörpers (2) oder der Trägerkörper (2), mit einem ein Maschinengestell (14), an dem ein angetriebenes Fördermittel (15) wie beispielsweise ein Förderband oder ein Förderriemen vorgesehen ist und das bevorzugt bodenstehend ausgeführt ist,
**dadurch gekennzeichnet, dass** ein lösbares Kupplungssystem (8) zur Koppelung und Entkoppelung des Cremestreichkopfs (1) mit oder von der Fördervorrichtung (6) vorgesehen ist.

4. Vorrichtung nach Anspruch 3, **dadurch gekennzeichnet, dass** das Kupplungssystem (8) das oder die Zentriermittel (7) umfasst, wobei die Zentriermittel (7) jeweils zwei Steckpartner umfassen, die entlang der Steckrichtung (13) miteinander verbindbar und voneinander trennbar sind, und wobei ein Steckpartner bevorzugt dauerhaft mit der Fördervorrichtung (6) und der andere Steckpartner bevorzugt dauerhaft mit dem Cremestreichkopf (1) verbunden ist.

5. Vorrichtung nach Anspruch 3 oder 4, **dadurch gekennzeichnet, dass** das Kupplungssystem (8) den Stecker (9) umfasst, wobei der Stecker (9) zwei Steckpartner umfasst, die entlang einer Steckrichtung (13) miteinander verbindbar und voneinander trennbar sind und wobei ein Steckpartner bevorzugt dauerhaft mit der Fördervorrichtung (6) und der andere Steckpartner bevorzugt dauerhaft mit dem Cremestreichkopf (1) verbunden ist.

6. Vorrichtung nach einem der Ansprüche 3 bis 5, **dadurch gekennzeichnet, dass** das Kupplungssystem (8) den Mediumsstecker (10) umfasst, wobei der Mediumsstecker zwei Steckpartner umfasst, die entlang der Steckrichtung (13) miteinander verbindbar und voneinander trennbar sind und wobei ein Steckpartner bevorzugt dauerhaft mit der Fördervorrichtung (6) und der andere Steckpartner bevorzugt dauerhaft mit dem Cremestreichkopf (1) verbunden ist.

7. Vorrichtung nach einem der Ansprüche 3 bis 6, **dadurch gekennzeichnet, dass** das oder die Zentriermittel (7), der oder die Stecker (9) und der oder die Mediumsstecker (10) in einer vorbestimmten Anordnung am Cremestreichkopf (1) und an der Fördervorrichtung (6) vorgesehen sind, eine betriebsfertige Verbindung zwischen dem Cremestreichkopf (1) und der Fördervorrichtung (6) hergestellt ist.

8. Vorrichtung nach einem der Ansprüche 3 bis 7, **dadurch gekennzeichnet, dass** die Steckrichtung (13) quer zur Förderfläche (16) der Fördervorrichtung (6) und insbesondere des Fördermittels (15) verläuft, dass die Steckrichtung (13) normal zur Förderfläche (16) der Fördervorrichtung (6) und insbesondere des Fördermittels (15) verläuft, und/oder dass die Steckrichtung (13) im Wesentlichen senkrecht oder lotrecht verläuft, sodass ein oberhalb einer Förderfläche (16) angeordneter Cremestreichkopf (1) nach oben angehoben werden kann oder abhebbar ist.

9. Vorrichtung nach einem der Ansprüche 3 bis 8, **dadurch gekennzeichnet, dass** das Kupplungssystem (8) ein werkzeuglos montierbares, insbesondere ein werkzeuglos trennbares und verbindbares Kupplungssystem (8) ist.

10. Vorrichtung nach einem der Ansprüche 3 bis 9, **dadurch gekennzeichnet, dass** eine Verrieglungsvorrichtung zur Verriegelung des Cremestreichkopfs (1) mit der Fördervorrichtung (6) vorgesehen ist.

11. **Anordnung** umfassend eine Vorrichtung nach einem der Ansprüche 3 bis 10, und zumindest zwei Cremestreichköpfe nach einem der Ansprüche 1 bis 2, **dadurch gekennzeichnet, dass** beide Cremestreichköpfe wechselweise auf die Vorrichtung aufsteckbar sind, sodass bevorzugt ein Cremestreichkopf von der Vorrichtung getrennt und entfernt werden kann und der zweite Cremestreichkopf unmittelbar danach, insbesondere an der selben Stelle, mit der Vorrichtung verbunden werden kann.

## Claims

1. Cream coating head (1) for dispensing and applying a cream or a mass, such as, in particular, a chocolate cream, to a substrate element (2), such as, in particular, a flat wafer, which is being moved on a conveying device (6), to form an intermediate product such as wafer sheets with an applied cream film for producing edible products, in particular wafer blocks, comprising
- a cream container (3) for receiving the cream to be dispensed,
- an elongated cream gap (4) for dispensing a band of cream which is, in particular, in the form of a cream film,
- wherein a connecting device (5) is provided for connecting the cream coating head (1) to the conveying device (6),
- wherein the connecting device (5) comprises one or more centring means (7) for centring and fixing the position of the cream coating head (1) in relation to the conveying device (6),
**characterised in that**
the connecting device (5) comprises a plug (9) for transmitting electrical energy and/or electrical signals,
that the connecting device (5) comprises a medium plug (10) for connecting to a medium pipeline, such as, in particular, a compressed air pipeline or a fluid pipeline, wherein the medium plug (10) is a sealing medium plug (10) for connecting two pipelines such as, in particular, two compressed air pipelines or two fluid pipelines and whereby a valve may be provided,
and
**in that** the centring means (7), the plug(s) 9 and the medium plug(s) (10) have the same plugging direction (13) so that the centring means (7), the plug(s) (9) and the medium plug(s) (10) can be connected with their respective plug partners through placing and in particular through mounting the cream coating head (1) on the conveyor device (6).

2. Cream coating head according to claim 1 **characterised in that** the cream coating head (1) comprises a self-supporting cream coating head frame (12) with which the components of the cream coating head (1) are connected so that the cream coating head can be detached and removed from the conveying device (6) in a modular manner.

3. Device for applying a pumpable mass to a substrate element (2) comprising
- a cream coating head (1) according to any one of the preceding claims,
- a conveying device (6) for conveying the substrate element (2) or substrate elements (2), with a machine frame (14) on which a driven conveying means (15), such as, for example, a conveyor belt or conveyor strap, is provided and which is preferably floor-standing,
**characterised in that** a detachable connecting system (8) for connecting and disconnecting the cream coating head (1) to or from the conveying device (6) is provided.

4. Device according to claim 3 **characterised in that** the connecting system (8) comprises the centring means (7), wherein the centring means (7) each comprise two plug partners which can be connected to and disconnected from each other along the plugging direction (13) and wherein one plug partner is preferably durably connected to the conveying device (6) and the other plug partner is preferably durably connected to the cream coating head (1).

5. Device according to claim 3 or 4 **characterised in that** the connecting system (8) comprises the plug (9), wherein the plug (9) comprises two plug partners which can be connected to and disconnected from each other along the plugging direction (13) and wherein one plug partner is preferably durably connected to the conveying device (6) and the other plug partner is preferably durably connected to the cream coating head (1) .

6. Device according to any one of claims 3 to 5 **characterised in that** the connecting system (8) comprises the medium plug (10), wherein the medium plug comprises two plug partners which can be connected to and disconnected from each other along the plugging direction (13) and wherein one plug partners is preferably durably connected to the conveying device (6) and the other plug partner is preferably durably connected to the cream coating head (1) .

7. Device according to any one of claims 3 to 6 **characterised in that** the centring means (7), the plug(s) (9) and medium plug(s) (10) are provided in a predetermined arrangement on the cream coating head (1) and on the conveying device (6) so that a ready to use connection between the cream coating head (1) and the conveying device (6) is produced.

8. Device according to any one of claims 3 to 7 **characterised in that** the plugging direction (13) runs transverse to the conveying surface (16) of the conveying device (6) and in particular the conveying means (15), that the plugging direction (13) runs normally to the conveying surface (16) of the conveying device (6) and in particular the conveying means, and/or the plugging direction (13) essentially runs vertically or perpendicularly so that a cream coating head (1) arranged above a conveying surface (16) can be lifted upwards or lifted off.

9. Device according to any one of claims 3 to 8 **characterised in that** the connecting system (8) is a connecting system (8) that can be assembled without tools, more particularly one that is separable and connectable without tools.

10. Device according to any one of claims 3 to 9 **characterised in that** a locking system for locking the cream coating head (1) with the conveying device (6) is provided.

11. Arrangement comprising a device according to any one of claims 3 to 10 and at least two cream coating heads according to any one of claims 1 to 2 **characterised in that** both cream coating heads can be alternately mounted on the device so that preferably one cream coating head can be detached and removed from the device and the second cream coating head can immediately afterwards be connected to the device, more particularly at the same point.

## Revendications

1. Tête de tartinage de crème (1) destinée à distribuer ou à appliquer une crème ou une masse, comme notamment une crème au chocolat sur un corps porteur (2) comme notamment une gaufrette, déplacé sur un dispositif de convoyage (6) pour la création d'un produit intermédiaire, comme des feuilles de gaufrettes dotées d'une application d'un film de crème, destinées à la production de produits alimentaires, comme notamment des blocs de gaufrettes, comprenant :
- un réservoir à crème (3) destiné à réceptionner la crème à distribuer,
- un interstice à crème (4) oblong, pour la distribution d'un ruban de crème, qui est réalisé notamment sous la forme d'un film de crème,
- sachant qu'il est prévu un agencement de couplage (5) pour coupler la tête de tartinage de crème (1) avec le dispositif de convoyage (6),
- l'agencement de couplage (5) comprenant un ou plusieurs moyens de centrage (7) pour le centrage et l'immobilisation de la position de la tête de tartinage de crème (1) par rapport au dispositif de convoyage (6),
**caractérisée en ce que** l'agencement de couplage (5) comporte un connecteur (9) pour la transmission d'énergie électrique et/ou de signaux électriques,
- **en ce que** l'agencement de couplage (5) comporte connecteur sur fluide (10) destiné à être relié avec un conduit à fluide, comme notamment un conduit d'air comprimé ou un conduit de liquide, le connecteur sur fluide (10) étant un connecteur sur fluide (10) étanche, destiné à relier deux conduits, comme notamment deux conduits d'air comprimé ou deux conduits de liquide et le cas échéant, une soupape étant prévue, et
- **en ce que** le ou les moyen(s) de centrage (7), le ou les connecteur(s) (9) et le ou les connecteur(s) sur fluide (10) présentent tous la même direction d'enfichage (13), de telle sorte que par enfichage et notamment par pose de la tête de tartinage de crème (1) sur le dispositif de convoyage (6), le ou les moyen(s) de centrage (7), le ou les connecteur (s) (9) et le ou les connecteur(s) sur fluide (10) puissent être reliés avec leur partenaire d'enfichage respectif.

2. Tête de tartinage de crème selon la revendication 1, **caractérisée en ce que** la tête de tartinage de crème (1) comprend un support de tête de tartinage (12) autoportant, à l'aide duquel les composants de la tête de tartinage de crème (1) sont reliés, de telle sorte que la tête de tartinage de crème (1) puisse être séparée et retirée de manière modulaire du dispositif de convoyage (6).

3. Dispositif destiné à appliquer une masse pompable sur un corps porteur (2) comprenant :
- une tête de tartinage de crème (1) selon l'une quelconque des revendications précédentes,
- un dispositif de convoyage (6) destiné à convoyer le corps porteur (2) ou les corps porteurs (2), doté d'un châssis de machine (14) sur lequel est prévu un moyen de convoyage (15) entraîné, comme par exemple une bande de convoyage ou une courroie de convoyage et qui est réalisé de préférence en version posée sur le sol,
**caractérisé en ce qu'**il est prévu un système de couplage (8) amovible, pour le couplage et le découplage de la tête de tartinage de crème (1) avec ou du dispositif de convoyage (6).

4. Dispositif selon la revendication 3, **caractérisé en ce que** le système de couplage (8) comprend le ou les moyen(s) de centrage (7), sachant que les moyens de centrage (7) comprennent chacun deux partenaires d'enfichage qui peuvent être reliés les uns aux autres et séparés les uns des autres le long de la direction d'enfichage (13) et que les partenaires d'enfichage sont reliés de préférence durablement au dispositif de convoyage (6) et l'autre partenaire d'enfichage est relié de préférence durablement avec la tête de tartinage de crème (1).

5. Dispositif selon la revendication 3 ou 4, **caractérisé en ce que** le système de couplage (8) comprend le connecteur (9), le connecteur (9) comprenant deux partenaires d'enfichage qui peuvent être reliés l'un à l'autre et séparés l'un de l'autre le long de la direction d'enfichage (13) et un partenaire d'enfichage étant relié de préférence durablement au dispositif de convoyage (6) et l'autre partenaire d'enfichage étant relié de préférence durablement à la tête de tartinage de crème (1).

6. Dispositif selon l'une quelconque des revendications 3 à 5, **caractérisé en ce que** le système de couplage comprend le connecteur sur fluide (10), le connecteur sur fluide comprenant deux partenaires d'enfichage, qui peuvent être reliés l'un à l'autre et séparés l'un de l'autre le long de la direction d'enfichage (13) et un partenaire d'enfichage étant relié de préférence durablement au dispositif de convoyage (6) et l'autre partenaire d'enfichage étant relié de préférence durablement à la tête de tartinage de crème (1).

7. Dispositif selon l'une quelconque des revendications 3 à 6, **caractérisé en ce que** le ou les moyen (s) de centrage (7), le ou les connecteur(s) (9) et le ou les connecteur(s) sur fluide (10) sont prévus selon un agencement prédéfini sur la tête de tartinage de crème (1) et sur le dispositif de convoyage (6), de telle sorte qu'il soit établi une liaison prête à l'emploi entre la tête de tartinage de crème (1) et le dispositif de convoyage (6).

8. Dispositif selon l'une quelconque des revendications 3 à 7, **caractérisé en ce que** la direction d'enfichage (13) s'écoule à la transversale de la surface de convoyage (16) du dispositif de convoyage (6) et notamment du moyen de convoyage (15), **en ce que** la direction d'enfichage (13) s'écoule à la normale de la surface de convoyage (16) du dispositif de convoyage (6) et notamment du moyen de convoyage (15), et/ou **en ce que** la direction d'enfichage (13) s'écoule sensiblement à la verticale ou à la perpendiculaire, de telle sorte qu'une tête de tartinage de crème (1) placée au-dessus d'une surface de convoyage (16) puisse être relevée vers le haut ou abaissée.

9. Dispositif selon l'une quelconque des revendications 3 à 8, **caractérisé en ce que** le système de couplage (8) est un système de couplage (8) pouvant être monté sans outil, notamment pouvant être séparé et relié sans outil.

10. Dispositif selon l'une quelconque des revendications 3 à 9, **caractérisé en ce qu'**il est prévu un dispositif de verrouillage, destiné à verrouiller la tête de tartinage de crème (1) avec le dispositif de convoyage (6) .

11. Agencement, comprenant un dispositif selon l'une quelconque des revendications 3 à 10 et au moins deux têtes de tartinage de crème selon l'une quelconque des revendications 1 à 2, **caractérisé en ce que** les deux têtes de tartinage de crème sont enfichables à tour de rôle sur le dispositif, de telle sorte que de préférence, une tête de tartinage de crème puisse être séparée et retirée du dispositif et la deuxième tête de tartinage de crème puisse être reliée directement par la suite, notamment au même endroit au dispositif.
